# EUROPEAN PATENT APPLICATION

(11) **EP 1 293 322 A1**
(43) Date of publication of application: **19.03.2003**
(21) Application number: 02019980.8
(22) Date of filing: 05.09.2002
(51) Int. Cl.: B29C 45/17, A01G 9/02

(54) **Flowerpot with hollow rim and its manufacture using gas-assisted injection molding**

(30) Priority: 14.09.2001 IT TO20010879
(71) Applicant: Pietro Serralunga S.r.l., 13900 Biella (IT)
(72) Inventor: Serralunga, Marco, 13900 Biella (IT)
(74) Representative: Lotti, Giorgio

(57) **Abstract**

Described herein is a flowerpot made of plastic material, the top rim of which has a closed outer profile, and the procedure for manufacturing which comprises the steps of preparation of the mould, hot injection of the plastic material, injection of a gas at high pressure, cooling, and extraction of the flowerpot.

## Description

The present invention relates to a flowerpot made of plastic material and, more precisely, to a flowerpot and the procedure for its manufacture.

Currently produced plastic flowerpots normally have the top rim folded back to form a reversed U in cross-sectional view. The said rim bestows on the flowerpot a degree of solidity and compactness that is insufficient as compared to that of a traditional flowerpot and moreover renders any displacement of the flowerpot problematical, above all when the pot contains the soil and the plant, which make the pot considerably heavy.

The latter drawback is in part overcome by a second type of plastic flowerpot which has the rim closed, i.e., without any recess or hollow underneath it. This type of rim is obtained with a known manufacturing procedure: rotational-and-blow moulding.

However, the rim in question appears closed only to the eye, since, inside, it has a rimmed wall that does not connect up to the wall of the flowerpot. If on the one hand this type of "closed" rim affords the advantage of rendering the flowerpot easier to handle, even when it is full of soil, on the other hand it presents various drawbacks, including the following:
- if the flowerpot is not completely full of soil, the internal wall that is not joined to the rim remains completely visible, with a consequent adverse effect from the point of view of appearance;
- when transferring plants from one flowerpot to another it is possible for soil to deposit on the inside of the folded-back rim, so that its subsequent removal is hard to carry out;
- in the case where it is necessary to replace a plant, the internal rim hinders extraction of the compact mass, made up of the soil and the roots of the plant.

A purpose of the present invention consists in providing a flowerpot made of plastic material provided with a rim that enables the above drawbacks to be overcome.

A further purpose of the invention is to provide a manufacturing procedure which will enable the aforesaid plastic flowerpot to be produced.

The above purposes are achieved by the present invention, the subject of which is a flowerpot made of plastic material, the top rim of which is characterized in that it has the external profile closed.

The subject of the present invention is also the procedure for manufacturing the flowerpot according to Claim 1, which consists of the following steps:
- a) preparation of the mould;
- b) injection by pressure of the plastic material inside the mould until the latter is filled up; and
- c) cooling of the injected material; and is characterized in that, immediately after Step b) and before Step c), the step is performed of:
- b1) injection of a gas under high pressure inside the channel of the mould which defines the rim, and expulsion of any excess material.
   Further characteristics and advantages of the present invention will emerge clearly from the ensuing description, with reference to the attached drawings, which are provided purely by way of nonlimiting example and in which:

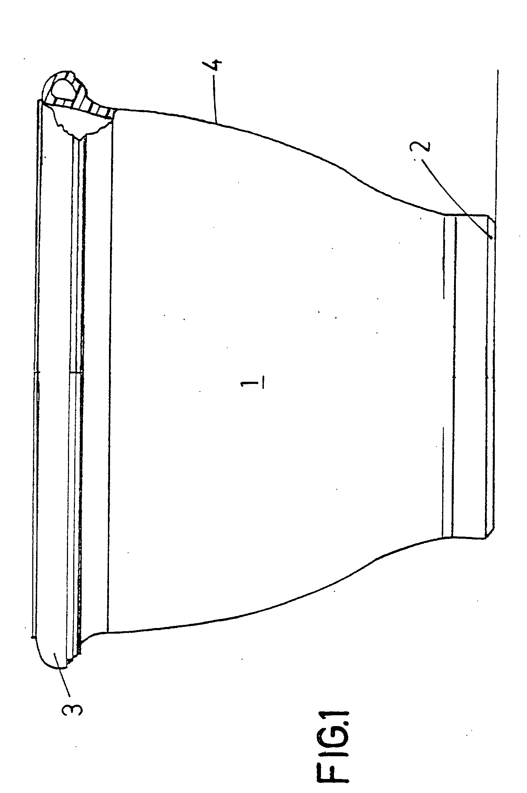

- Figure 1 is a side view of a flowerpot made according to the procedure of the invention, with a part of the rim sectioned; and

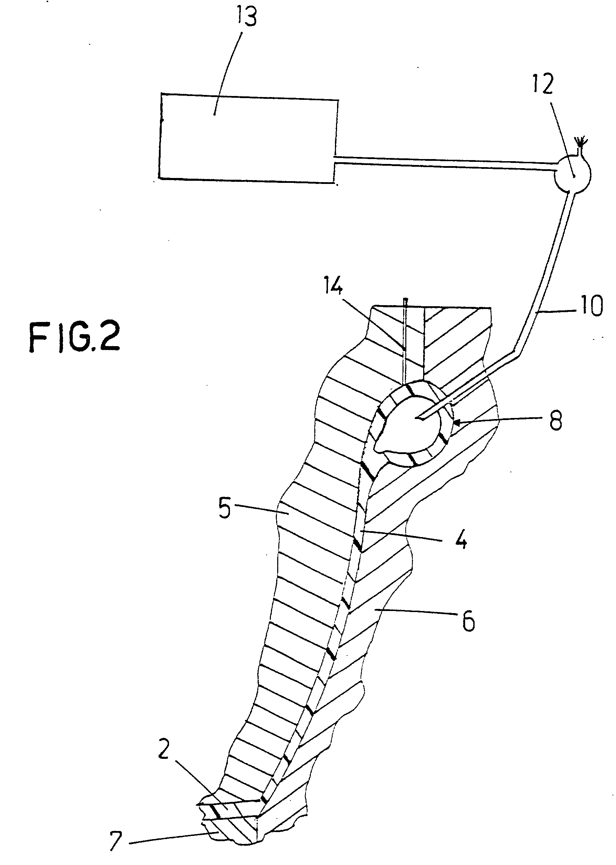

- Figure 2 is a partially sectioned schematic view of the mould for manufacturing plastic flowerpots, by means of a hot-injection process, the said mould being provided with the equipment necessary for the procedure according to the invention.

With reference to the figures, the reference number 1 designates a flowerpot 1, namely a flowerpot made of plastic material, produced using a process of hot injection in a mould. The shape of the flowerpot is that of a reversed truncated cone, with a resting base 2 and a top rim 3, which has a rounded profile.

The above rim, according to the invention, has a cross section substantially in the form of an annulus, which is connected without any discontinuity to the side wall 4 of the flowerpot which rises from the base 2.

According to the invention, to obtain a closed rim in a container, in particular in a flowerpot, made of plastic material, it is necessary to inject gas, preferably nitrogen, at high pressure into the cavity of the mould 5, 6 and 7 in which said rim 3 is formed. A mould will then be made such that, in an area corresponding to the rim 3, there is a circular channel 8, the profile of which, in cross-sectional view, represents the external shape of the rim of the flowerpot to be made. The channel will be connected, without any discontinuity, with the cavity defining the side wall 4 of the flowerpot, which is in turn connected to the cavity defining the base 2. Coming out into the channel 8 are one or more ducts 10, which are connected, by means of a pressure regulator 12, to a source 13 of high-pressure gas. The said source may, for example, be a cylinder of the type commercially available, or else a pump of suitable power. The mould 5 will moreover be provided with one or more ducts 14 of appropriate dimensions, in order to discharge the excess material which is in the channel 8 and which is pushed out by the high-pressure gas. Instead of the ducts, also wells (not illustrated) can be used, preferably of a size such as to correspond substantially to the space to be emptied, increased by approximately 20%.

Consequently, the procedure for manufacturing the plastic flowerpot according to the invention will consist of the following steps:
Step a): preparation and positioning of the mould;
Step b): injection of the liquefied plastic material inside the mould, until the latter is completely filled;
Step b1) which follows immediately after step b): injection of high-pressure gas, using appropriate equipment, inside the channel 8 of the mould that defines the shape of the rim. The level of pressure and the volume of gas injected must be defined experimentally, according to the shape of the rim and the desired thickness of its wall. The injected gas, preferably nitrogen, naturally occupies the space at the centre of the channel, pushing the plastic material against the wall of the mould, whilst any excess material is discharged through the ducts 14 (or, alternatively, through the wells), which are appropriately positioned around the circumference of the channel. A further advantage of this procedure, as compared to the known art, lies in the fact that the plastic material in the area of the rim is forcefully pressed against the wall of the mould, so preventing any possible malformation of the external surface of the wall of the flowerpot rim; and
Step c) : cooling and extraction of the finished flowerpot.

## Claims

1. A flowerpot in plastic material **characterized in that** it has the top rim (3) with a closed outer profile.

2. The flowerpot according to Claim 1, **characterized in that** the cross section of the top rim (3) is substantially shaped like an annulus.

3. A procedure for manufacturing the flowerpot according to Claim 1, which involves the steps of:
a) preparation of the mould;
b) hot injection of the liquefied plastic material into the mould until the latter is filled up; and
c) cooling and extraction of the finished flowerpot (1);
**characterized in that**, immediately after Step b) and before Step c), the step is performed of:
b1) injection of a gas under high pressure inside the channel (8) of the mould (5, 6, 7) which defines the shape of the rim (3) of the flowerpot (1), with expulsion of any excess material.

4. The procedure according to Claim 3, **characterized in that** the injected gas is nitrogen.

5. The procedure according to Claim 3, **characterized in that** a mould provided with means necessary for injecting gas under high pressure into the channel (8) of the mould (5, 6, 7) is used.

6. The procedure according to Claim 3, **characterized in that** a mould provided with means necessary for discharging the excess material injected is used.
